# EUROPEAN PATENT SPECIFICATION

(11) **EP 1 048 220 B1**
(45) Date of publication and mention of the grant of the patent: **17.10.2012**
(21) Application number: 99108164.7
(22) Date of filing: 26.04.1999
(51) Int. Cl.: A23F 5/24

(54) **A whitened coffee concentrate**
Ein aufgehelltes Kaffeekonzentrat
Un concentré de café blanchi

(43) Date of publication of application: 02.11.2000
(73) Proprietor: SOCIETE DES PRODUITS NESTLE S.A., 1800 Vevey (CH)
(72) Inventor: Cevallos, Agustin, 3114 Niederwichtrach (CH); Chmiel, Oliver, 1350 Orbe (CH); Munz-Schaerer, Daniela Doris, 3510 Konolfingen (CH); Knoblich, Cristin, 3510 Konolfingen (CH); Bodenstab, Stefan, 1775 Mannens FR (CH); Kuslys, Martinas, 3506 Grosshoechstetten (CH)
(74) Representative: Cogniat, Eric Jean Marie

(56) References cited:
- EP-A- 0 893 065
- WO-A-89/04282
- CH-A- 255 956
- FR-A- 2 610 174
- GB-A- 1 130 129
- GB-A- 1 415 844
- US-A- 2 340 989
- US-A- 2 801 920
- US-A- 4 983 408
- CHEMICAL ABSTRACTS, vol. 96, no. 10, 1982 Columbus, Ohio, US; abstract no. 161136w, G. EHLERS: "Possible applications of enzymes in coffee processing" XP002116577 & "Colloq. Sci. Int. Cafe 9th(1)" 1980 * page 267 - page 271 *

## Description

### Field of the Invention

This invention relates to a stable, whitened coffee concentrate. The invention also relates to a method for stabilising whitened coffee concentrates and a process for producing stable, whitened coffee concentrates.

### Background to the Invention

Coffee products which contain mixtures of soluble coffee solids and milk solids are commonly found in two forms; as soluble beverage powders and as ready-to-drink liquid beverages. Although these products appear to be simple, severe difficulties need to be overcome in order to produce them. In particular, the problem lies in the fact that a mixture of coffee and milk is very unstable.

For soluble beverage powders, a common problem is the appearance of flocculated milk proteins once the beverage has been reconstituted with water. The flocculated milk proteins negatively affect consumer acceptability. The problem of flocculation of the milk proteins in coffee beverages has been satisfactorily dealt with by a process in which the milk proteins are subjected to a controlled flocculation step during processing. After processing in this way, any flocculated milk proteins in the reconstituted beverage are too small to be visible. This process is described in US patent 5,620,733.

For ready-to-drink liquid beverages, apart from problems with flocculation of milk proteins, it is found that lipids in the beverage rises to the surface of the beverage in the form of globules. These globules form an agglomerated, white layer known as a cream layer and the phenomenon is known as creaming. Upon shaking of the container, the globules usually re-disperse within the beverage. However, a persistent, visible white ring usually remains on the container at the interface between the liquid beverage and the gas above it. Consumers usually find the presence of this ring unacceptable. Various processing techniques and stabilisers are needed to deal with the problem.

The stability problems become even more pronounced when whitened coffee products are formulated into a liquid concentrate form. Coffee concentrates are known in the art. For instance, US A-2340989 describes the preparation of a viscous coffee concentrate where coffee extract, milk and sugar are mixed and the mixture evaporated to a syrup-like consistency, the product then being homogenized and mixed with concentrated coffee essence, essential oils and extracts. CH-A-255956 discloses the preparation of a concentrated coffee beverage by adsorption of coffee roasting gases in a carbohydrate and addition of the product to concentrated coffee extract. Condensed milk may be added to the concentrated coffee extract prior to packaging. GB 1415844 discloses a coffee and milk concentrate having milk components and soluble coffee solids. In general, the coffee component of concentrates develops increased acidity over time. Apart from negatively influencing the taste of products reconstituted from the concentrate, the increase in acidity leads to curdling of the milk component. Also, problems such as gelation and sedimentation occur. Therefore, despite the advantages offered by concentrates, acceptable whitened coffee concentrates are not commercially available.

Therefore there is a need for a stable, whitened coffee concentrate.

### Summary of the Invention

Accordingly, this invention provides a stable, whitened coffee concentrate having a solids concentration above about 25% by weight, the whitened coffee concentrate comprising concentrated milk components, enzymatically hydrolysed concentrated soluble coffee solids, and added coffee aroma in the form of an aromatised coffee concentrate with a total organic content (TOC) of above about 300 mg/100g of aromatised coffee concentrate.1

It has been surprisingly found that the addition of coffee aroma stabilises the whitened coffee concentrate. This is indeed surprising since coffee aroma is ordinarily more unstable than either milk concentrate or coffee concentrate.

The stable, whitened coffee concentrate preferably has a solids concentration of about 65% to about 80% by weight; for example about 70% to about 75% by weight.

Preferably the whitened coffee concentrate has a ratio, on a dry basis, of milk solids to coffee solids of less than about 1:0.7; for example about 1:0.1 to about 1:0.6.

Preferably, the whitened coffee concentrate comprises about 50% to about 60% sugar, about 15% to about 25% non fat milk solids, about 8% to about 15% soluble coffee solids, and about 8% to about 15% milk fat.

The coffee aroma preferably comprises a cryogenically condensed aroma. Further, the coffee aroma is provided in the form of an aromatised coffee concentrate. The aromatised coffee concentrate is highly concentrated in aroma; it has a total organic content (TOC) of above about 300 mg/100g of aromatised coffee concentrate.

The whitened coffee concentrate is preferably provided in the form of a sachet or stick pack. In this form, the whitened coffee concentrate may be used to reconstitute a single cup of coffee.

In another aspect, this invention provides a method for stabilising a whitened coffee concentrate, the method comprising incorporating a coffee aroma in the form of an aromatised coffee concentrate with a total organic content (TOC) of above about 300 mg/100g of aromatised coffee concentrate, in a whitened coffee concentrate comprising enzymatically hydrolysed concentrated soluble coffee solids to provide a stabilised coffee concentrate, the stabilised coffee concentrate having a solids concentration above about 25% by weight.

In yet another aspect, this invention provides claim 7

### Detailed Description of the Preferred Embodiments

Embodiments of the invention are now described by way of example only. This invention provides a stable, whitened coffee concentrate which has a solids concentration above about 25% by weight. The whitened coffee concentrate comprises a mixture of concentrated milk components, concentrated soluble coffee solids, and a stabilising amount of a coffee aroma. The coffee aroma surprisingly stabilises the whitened coffee concentrate. The whitened coffee concentrate may be stored under shelf conditions for long periods of time without significant stability and flavour-degradation problems.

The concentrated soluble coffee solids may be provided in the form of a suitable base coffee concentrate. The base coffee concentrate may be prepared in one of two ways. In the first way, soluble coffee power may be dissolved in water at the desired concentration. In the second way, a coffee extract obtained from a coffee extraction process may be concentrated to the desired coffee concentration. The coffee extract may be produced in the usual manner by subjecting roasted coffee beans to extraction. Any suitable extraction procedure may be used because the choice and design of the extraction procedure is a matter of preference and has no critical impact on the invention. Similarly, any suitable concentration procedure may be used because the choice and design of the concentration procedure is a matter of preference and has no critical impact on the invention.

According to the invention the concentrated coffee components is subjected to enzymatic hydrolysis; for example using a gamanase. Hydrolysis using a gamanase offers the advantage of further reduction in stability problems such as sedimentation.

The coffee aroma is conveniently provided in the form of a highly aromatised coffee concentrate. The aromatised coffee concentrate may be prepared by adding coffee aroma to a coffee concentrate. The coffee aroma is in the form of natural coffee aroma components which may be collected during the preparation of soluble coffee powder. This may be done by standard procedures for collecting coffee aroma components or by suitably modifying the standard procedures.

Preferably, the natural coffee aroma components include highly volatile aroma components. Highly volatile aroma components are those which condense at a temperature below about 0°C. To capture highly volatile aroma components, the standard procedure usually entails flushing volatile aroma components from the coffee during processing using an inert carrier gas such as nitrogen. The aroma-laden carrier gas is then chilled to temperatures lower than about -40°C, and sometimes as low as about -195°C, to cause the aroma components to condense. The condensed aroma components are then collected. Suitable procedures for capturing coffee aroma are disclosed in, for example, US patents 3823241, 5030473, and 5222364.

Sufficient coffee aroma is added to the coffee concentrate to provide a total organic concentration (TOC) of above about 300 mg/100g of aromatised concentrate. More preferably, the aromatised concentrate has a TOC of about 350 mg/100g to about 450 mg/100g of aromatised concentrate. The aromatised coffee concentrate preferably has a solids concentration of about 35% to about 45% by weight.

The concentrated milk components may be provided in the form of a suitable milk concentrate. The milk concentrate may be prepared as is conventional. One suitable procedure is that commonly used to produced condensed milk. For example, a standardised solution having the selected solids content may be prepared from skimmed milk solids, milk fat, water and sugar. If desired, additional milk protein sources such as whey or casein may be added although this is not necessary. Alternatively, the milk concentrate may be prepared by suitably concentrating milk. If a milk concentrate is used, the milk concentrate preferably has a milk solids content above about 30% by weight. For example, the milk concentrate may have a solids concentration of about 50% by weight to about 85% by weight.

The stable, whitened coffee concentrate may be produced from the concentrated milk components, concentrated coffee components, and coffee aroma in several ways. For example, the concentrated coffee components and the coffee aroma may be combined. The concentrated milk components may then be added to the mixture. Alternatively, the mixture may be added to the concentrated milk components in the form of a milk concentrate. As a further alternative, the concentrated milk components, concentrated coffee components, and coffee aroma may be combined together in one step. Suitable mixers may be used to combine the ingredients.

The whitened coffee concentrate produced by combining the ingredients preferably has a ratio, on a dry basis, of milk solids to coffee solids of less than about 1:0.7; for example about 1:0.2 to about 1:0.6.

Additional ingredients may be incorporated into the whitened coffee concentrate as desired. For example, the whitened coffee concentrate may contain:-
- buffers such as sodium and potassium bicarbonate, di-sodium and dipotassium phosphate, sodium and potassium citrates, and various combinations of these buffers.
- suitable sweeteners such as maltodextrin, saccharin, cyclamates, acetosulfame, sucralose, L-aspartyl based sweeteners such as aspartame, and mixtures of these sweeteners.
- suitable flavours such as vanilla, bourbon, whisky, chocolate, and the like.
- suitable emulsifiers such as mono- and di-esters of glycerol and a fatty acid, glycerol monostearates, sorbitol monostearates, esters or carbocyclic acids with mono- and di-glycerides, monosodium phosphate derivatives of mono- and di-glycerides, lecithin, diacetyl tartaric acid esters of mono-diglycerides (data esters), sorbitan esters, diacetyl tartaric acids esters of mono- and di-glycerides, succinylated mono- and di-glycerides, acetylated mono- and di-glycerides, hydroxylated lecithin, propylene glycol mono- and di-esters of fatty acids, polyglycerol esters of fatty acids, lactylic esters of fatty acids, and mixtures of these emulsifiers.

If the whitened coffee concentrate does not have the desired solids concentration, this may be standardised. In one embodiment, the whitened coffee concentrate has a solids concentration of about 65% to about 85% by weight; more preferably about 70% by weight to about 80% by weight. For example, the whitened coffee concentrate may have a solids concentration of about 70% to about 75% by weight. In another embodiment, the whitened coffee concentrate has a solids concentration of about 30% to about 35% by weight.

The water activity of the whitened coffee concentrate may be about 0.80 to about 0.95. Further, the pH of the whitened coffee concentrate may be about 6.0 to about 7.0; for example about 6.5.

The whitened coffee concentrate may then be subjected to colloidal milling if desired. Ordinarily, colloidal milling is not necessary for whitened coffee concentrates having a solids concentration of less than about 50% by weight. The colloidal milling may take place under raised temperature conditions; for example at about 100°C to about 150°C. The time for which the whitened coffee concentrate is subjected to colloidal milling may be selected as desired; for example about 1 minute to about 20 minutes.

If the whitened coffee concentrate is to be aseptically filled into containers, it is preferably heat treated at this stage of the process. For example, the whitened coffee concentrate may be subjected to ultra high temperature (UHT) treatment at a temperature above about 115°C; for example to about 120°C to about 150°C. The mixture is held at the raised temperature for a time less than about 5 minutes; often sufficient to provide a Fₒ value of at least about 4. For example, the whitened coffee concentrate may be heated to a temperature in the range of about 120°C to 135°C for about 1 to 5 minutes.

Whether heat treated or not, the whitened coffee concentrate may then be subjected to homogenisation. This is preferably carried out in two stages. For example, for whitened coffee concentrates which have been subjected to colloidal milling, homogenisation may be carried out in a first stage at about 5 MPa to about 25 MPa and then in a second stage at about 1MPa to about 5MPa. For whitened coffee concentrates which have not been subjected to colloidal milling, homogenisation may be carried out in a first stage at about 15 MPa to about 30 MPa and then in a second stage at about 3MPa to about 10MPa.

The whitened coffee concentrate is then filled into suitable containers, with or without thermal treatment prior to filling.

In one alternative, the whitened coffee concentrate may be heated to a temperature of about 80°C to about 100°C for a period of less than about 1 minute. The hot concentrate may then be hot filled into suitable containers.

In another alternative, the whitened coffee concentrate may aseptically filled into suitable containers.

In another alternative, the whitened coffee concentrate may be may be filled into suitable containers and then retorted.

In a yet further alternative, the whitened coffee concentrate may be frozen and filled into a suitable container.

The containers may flexible, semi-rigid or rigid depending upon the process conditions and the type of product desired. Suitable containers included stick packs; sachets; carton-based, tetrahedron packs (closeable or not); Unifill packs; squeezeable plastic bottles; stand up pouches; plastic cups; etc. Equipment and material for producing the packs are commercially available. The containers should be such that they provide a barrier to keep water vapour, oxygen and light transmission to the whitened coffee concentrate to a minimum.

For single serving containers, the container is suitably a sachet or stick pack. A stick pack may be considered to be a long, narrow sachet. Equipment and films for producing the packs are commercially available. A film which contains polyester/aluminium/polyethylene layers is an example of a film which provides a sufficiently high barrier. Vertical form fill and seal machines may be used. Conveniently, the sachet or stick pack has a tear off section which may be provided in the usual manner by a notch, fancy cut or laser cut. Presenting the whitened coffee concentrate in this form offers the advantage that the whitened coffee concentrate may be provided in a convenient, single serving pack. The consumer then need only open the pack, pour or squeeze out the concentrate into a cup, and add water. The stick pack may contain about 20g to about 50g of the concentrate.

Beverages produced from the whitened coffee concentrate have a good aroma and flavour profile without harsh acidity. Further, the whitened coffee concentrate has good stability and may be stored for extended periods under shelf conditions.

Specific examples of the invention are now described to further illustrate the invention.

### Example 1 - Comparative example -

A coffee aroma is collected from freshly ground coffee and cryogenically condensed as described in US patent 5222364. Further, an aqueous aroma distillate obtained from steam stripping of coffee extract in a conventional manner. The condensed aroma and the aqueous aroma distillate are then mixed into a coffee concentrate which has a coffee solids concentration of about 50% by weight. The resulting aromatised coffee concentrate has a solids concentration of about 39% by weight and a TOC of about 382 mg/100g of coffee concentrate.

A base coffee concentrate is prepared by dissolving soluble coffee solids in water. The base coffee concentrate has a solids concentration of about 25% to about 30% by weight.

The base coffee concentrate and the aromatised coffee concentrate are then combined in a mixer in a weight ratio of 5:1. The resulting coffee concentrate has a solids concentration of about 25% to about 30% by weight by weight.

Milk concentrate components (about 22% by dry weight of skimmed milk solids, about 12% by dry weight of butter fat, about 66% by dry weight of sugar), are then added to the resulting coffee concentrate in a mixer to provide a whitened coffee concentrate. The ratio of non-fat milk solids to coffee solids in the whitened coffee concentrate is about 1:0.58. A small amount of disodium phosphate (about 0.4% by dry weight) is included in the whitened coffee concentrate. The whitened coffee concentrate is standardised to a solids content of about 72% by weight, a water activity of about 0.83 and a pH of about 6.5.

The whitened coffee concentrate is then subjected to colloidal milling. The milled concentrate is then homogenised in two stages; in a first stage at about 10 MPa and then in a second stage at about 3MPa. The homogenised concentrate is then heated to about 93°C for about 45 seconds by direct injection of steam. The hot concentrate is then filled into stick packs each containing about 20 g of whitened coffee concentrate. A vertical form fill and seal machines is used. The film is a polyester/aluminium/polyethylene film. The stick pack has a tear off section provided by a laser cut.

A stick pack is opened and the contents sqzueezed into a cup. About 150 ml of hot water is added and the mixture stirred. Reconstitution is instantaneous. A whitened coffee beverage is obtained. No milk flocculation is noticed and no lumps or other undissolved material is determinable. The beverage is tasted and found to have a smooth coffee taste, no noticeable harshness and acidity and with well defined, rich coffee aroma. The beverage has an excellent mouthfeel with no sandiness or dust-like texture.

### Example 2 - comparative example

The process of example 1 is repeated except that no coffee aroma is incorporated into the whitened coffee concentrate. The stick packs are labelled as group A. The stick packs of example 1 are labelled as group 1. All stick packs are stored at 20°C. A sample from each group is opened after 1 month and each month thereafter for a total storage time of 5 months. The viscosity of the concentrate is determined and the sedimentation is determined. The results are as follows:

| Group | Time (months) | Viscosity (mPa/s) | Sedimentation (mm) |
|---|---|---|---|
| A | 1 | 2800 | 0.4 |
| | 2 | 3100 | 1.9 |
| | 3 | 4800 | 2.9 |
| | 4 | 5700 | 3.9 |
| | 5 | ND | 7.0 |
| 1 | 1 | 2000 | 0.4 |
| | 2 | 1600 | 0.4 |
| | 3 | 1800 | 1.9 |
| | 4 | 2000 | 1.9 |
| | 5 | 2200 | 1.9 |

The results indicate that the whitened coffee concentrate which contains coffee aroma is much maintains substantially constant viscosity and is less susceptible to gelation. Also, sedimentation is much less.

### Example 3 - according to the invention

The process of example 1 is repeated except that base coffee concentrate is subjected to enzymatic hydrolysis using gamanase 1.5L prior to the addition of the coffee aroma.

Stick packs containing the whitened coffee concentrate are stored for a period of up to 9 months. After about 9 months, stability problems such as creaming, coagulation, sedimentation and gelation begin to reach unacceptable levels. Whitened coffee concentrate which contains coffee solids which have not been hydrolysed and which does not contain coffee aroma begin to suffer unacceptable stability problems after 1 to 3 months.

## Claims

1. A stable, whitened coffee concentrate having a solids concentration above about 25% by weight, the whitened coffee concentrate comprising concentrated milk components, enzymatically hydrolysed concentrated soluble coffee solids, and added coffee aroma in the form of an aromatised coffee concentrate with a total organic content (TOC) of above about 300 mg/100g of aromatised coffee concentrate.

2. A concentrate of claim 1 which has a ratio, on a dry basis, of non-fat milk solids to coffee solids of about 1:0.1 to about 1:0.7.

3. A concentrate of any of claims 1 or 2 which comprises about 50% to about 60% sugar, about 15% to about 25% non fat milk solids, about 8% to about 15% soluble coffee solids, and about 8% to about 15% milk fat, the percentages being on the basis of dry weight.

4. A concentrate of any of claims 1 to 3 which has a solids concentration of about 70% to about 80% by weight.

5. A single-serve sachet which contains a concentrate according to any of claims 1 to 4.

6. A method for stabilising a whitened coffee concentrate, the method comprising incorporating a coffee aroma in the form of an aromatised coffee concentrate with a total organic content (TOC) of above about 300 mg/100g of aromatised coffee concentrate, in a whitened coffee concentrate comprising enzymatically hydrolysed concentrated soluble coffee solids to provide a stabilised coffee concentrate, the stabilised coffee concentrate having a solids concentration above about 25% by weight.

7. A process for preparing a stable whitened coffee concentrate, the method comprising:
- incorporating a coffee aroma in the form of an aromatised coffee concentrate with a total organic content (TOC) of above about 300 mg/100g of aromatised coffee concentrate in a whitened coffee concentrate comprising enzymatically hydrolysed concentrated soluble coffee solids and concentrated milk components,
- homogenising the whitened coffee concentrate; and
- filling the homogenised concentrate into containers for providing a stable whitened coffee concentrate, the stable whitened coffee concentrate having a solids content of above about 25% by weight.

## Patentansprüche

1. Stabiles geweißtes Kaffeekonzentrat mit einer Feststoffkonzentration von mehr als etwa 25 Gew.-%, wobei das geweißte Kaffeekonzentrat konzentrierte Milchbestandteile, enzymatisch hydrolysierte konzentrierte lösliche Kaffeefeststoffe und hinzugegebenes Kaffeearoma in Form eines aromatisierten Kaffeekonzentrats mit einem Gesamtgehalt an organischem Kohlenstoff (TOC) von mehr als etwa 300 mg/100g aromatisiertem Kaffeekonzentrat enthält.

2. Konzentrat nach Anspruch 1, das ein Verhältnis, auf Trockenbasis, von fettfreier Milchtrockenmasse zu Kaffeefeststoffen von etwa 1:0,1 bis etwa 1:0,7 hat.

3. Konzentrat nach einem der Ansprüche 1 oder 2, welches etwa 50% bis etwa 60% Zucker, etwa 15% bis etwa 25% fettfreie Milchtrockenmasse, etwa 8% bis etwa 15% lösliche Kaffeefeststoffe und etwa 8% bis etwa 15% Milchfett enthält, wobei die Prozentangaben auf dem Trockengewicht basieren.

4. Konzentrat nach einem der Ansprüche 1 bis 3, das eine Feststoffkonzentration von etwa 70 Gew.-% bis etwa 80 Gew.-% hat.

5. Einzelportionsbeutel, der ein Konzentrat nach einem der Ansprüche 1 bis 4 enthält.

6. Verfahren zur Stabilisierung eines geweißten Kaffeekonzentrats, bei dem ein Kaffeearoma in Form eines aromatisierten Kaffeekonzentrates mit einem Gesamtgehalt an organischem Kohlenstoff (TOC) von mehr als etwa 300 mg/100g an aromatisiertem Kaffeekonzentrat in ein geweißtes Kaffeekonzentrat inkorporiert wird, das enzymatisch hydrolysierte konzentrierte lösliche Kaffeefeststoffe enthält, um ein stabilisiertes Kaffeekonzentrat bereitzustellen, wobei das stabilisierte Kaffeekonzentrat eine Feststoffkonzentration von mehr als etwa 25 Gew.-% hat.

7. Verfahren zur Herstellung eines stabilen geweißten Kaffeekonzentrats, bei dem:
- ein Kaffeearmoma in Form eines aromatisierten Kaffeekonzentrates mit einem Gesamtgehalt an organischem Kohlenstoff (TOC) von mehr als etwa 300 mg/100g an aromatisiertem Kaffeekonzentrat in ein geweißtes Kaffeekonzentrat inkorporiert wird, das enzymatisch hydrolysierte konzentrierte lösliche Kaffeefeststoffe und konzentrierte Milchbestandteile enthält,
- das geweißte Kaffeekonzentrat homogenisiert wird; und
- das homogenisierte Konzentrat in Behältnisse zur Bereitstellung eines stabilen geweißten Kaffeekonzentrates gefüllt wird, wobei das stabile geweißte Kaffeekonzentrat einen Feststoffgehalt von mehr als etwa 25 Gew.-% hat.

## Revendications

1. Concentré de café blanchi et stable présentant une concentration en matières solides supérieure à environ 25% en poids, le concentré de café blanchi comprenant des composants de lait concentrés, des matières solides de café solubles concentrées hydrolysées enzymatiquement, et de l'arôme de café ajouté qui est sous la forme d'un concentré de café aromatisé avec une teneur totale en matières organiques (TOC) supérieure à environ 300 mg/100 g de concentré de café aromatisé.

2. Concentré selon la revendication 1 qui a un rapport, sur une base sèche, de matières solides non grasses de lait sur matières solides de café d'environ 1:0,1 à environ 1:0,7.

3. Concentré selon l'une des revendications 1 ou 2 qui comprend d'environ 50% à environ 60% de sucre, d'environ 15% à environ 25% de matières solides non grasses de lait, d'environ 8% à environ 15% de matières solides de café solubles, et d'environ 8% à environ 15% de matière grasse de lait, les pourcentages étant sur la base du poids sec.

4. Concentré selon l'une des revendications 1 à 3 qui présente une concentration en matières solides d'environ 70% à environ 80% en poids.

5. Sachet à usage unique qui contient un concentré selon l'une des revendications 1 à 4.

6. Procédé pour la stabilisation d'un concentré de café blanchi, le procédé comprenant l'incorporation d'un arôme de café sous la forme d'un concentré de café aromatisé ayant une teneur totale en matières organiques (TOC) supérieure à environ 300 mg/100 g de concentré de café aromatisé, dans un concentré de café blanchi comprenant des matières solides de café solubles concentrées hydrolysées enzymatiquement afin de fournir un concentré de café stabilisé, le concentré de café stabilisé présentant une concentration en matières solides supérieure à environ 25% en poids.

7. Procédé pour la préparation d'un concentré de café blanchi stable, le procédé comprenant :
- une incorporation d'un arôme de café sous la forme d'un concentré de café aromatisé ayant une teneur totale en matières organiques (TOC) supérieure à environ 300 mg/100 g de concentré de café aromatisé dans un concentré de café blanchi comprenant des matières solides de café solubles concentrées hydrolysées enzymatiquement et des composants de lait concentrés,
- une homogénéisation de concentré de café blanchi ; et
- un remplissage du concentré homogénéisé dans des récipients pour fournir un concentré de café blanchi stable, le concentré de café blanchi stable présentant une teneur en matières solides supérieure à environ 25% en poids.
